# EUROPÄISCHE PATENTSCHRIFT

(11) **EP 1 982 099 B1**
(45) Veröffentlichungstag und Bekanntmachung des Hinweises auf die Patenterteilung: **25.05.2011**
(21) Anmeldenummer: 07703210.0
(22) Anmeldetag: 01.02.2007
(51) Int. Cl.: F16K 3/316, F16K 3/02

(54) **SCHIEBERVENTIL**
SLIDING VALVE
SOUPAPE A COULISSE

(30) Priorität: 06.02.2006 DE 102006005309; 21.06.2006 DE 102006028508; 09.08.2006 DE 102006037290
(43) Veröffentlichungstag der Anmeldung: 22.10.2008
(60) Teilanmeldung: 10178935.2
(73) Patentinhaber: Z&J Technologies GmbH, 52355 Düren (DE)
(72) Erfinder: HABERHAUFFE, Ingo, 45899 Gelsenkirchen-Horst (DE); PLUM, Wolfgang, 52372 Kreuzau-Winden (DE)
(74) Vertreter: Popp, Eugen
(86) Internationale Anmeldenummer: PCT/EP2007/000881
(87) Internationale Veröffentlichungsnummer: WO 2007/090565

(56) Entgegenhaltungen:
- JP-A- 8 145 200
- JP-A- 10 019 142
- JP-A- 10 184 936
- JP-A- 11 002 340
- JP-A- 11 013 900
- JP-A- 2000 035 140
- US-A- 3 976 094
- US-A- 4 458 879

## Beschreibung

Die Erfindung betrifft ein Schieberventil mit den Merkmalen des Oberbegriffs des Anspruchs 1.

Schieberventile dieser Art kommen üblicherweise in FCC-Anlagen (Fluidized Catalytic Cracking) zur Anwendung und dienen zur Regelung der Leistung der Anlage, wobei durch eine entsprechende Offen- bzw. Schließstellung des Schieberventils der Katalysatorstrom (Tonerde, AL₂O₃) eingestellt wird.

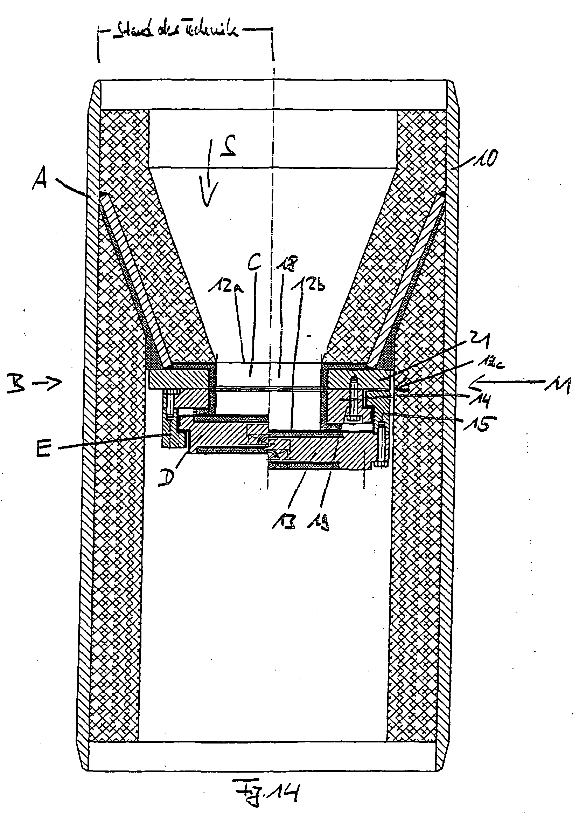

Ein Beispiel für ein solches in der Industrie verwendetes Schieberventil ist in Figur 14, linker Teilschnitt dargestellt. Dieses Schieberventil weist einen Rohrabschnitt A auf, in dem eine Blende B mit einer Blendenöffnung C angeordnet ist, die im Betrieb der Anlage vom Katalysatorstrom mit hoher Geschwindigkeit (10 m/sek.) bei Temperaturen von ca. 720°C durchströmt wird. Die Blendenöffnung wird, wie in Fig. 14 dargestellt, durch eine Schieberplatte D verschlossen, die quer zur Strömungsrichtung bewegbar gelagert ist. Zum Öffnen des Schieberventils wird die Schieberplatte D aus der in Fig. 14 gezeigten Schließstellung in eine Offenstellung verfahren, wodurch die Blendenöffnung C teilweise oder komplett freigegeben wird.

Zum Verschieben der Schieberplatte D sind rohrseitige Führungsleisten E vorgesehen, die seitlich von der Blendenöffnung C angebracht sind. Diese rohrseitigen Führungsleisten E sind im Eingriff mit komplementären an der Schieberplatte D vorgesehenen Führungsleisten. Die rohrseitigen Führungsleisten E sind dabei so angeordnet, dass diese in den Strömungsquerschnitt des Rohrabschnittes A hineinragen Die in den Strömungsquerschnitt des Rohrabschnittes A hineinragenden rohrseitigen Führungsleisten E sind dadurch dem Medienstrom ausgesetzt, der durch die Blendenöffnung C strömt, wenn die Schieberplatte D in die Offenstellung gebracht ist. Aufgrund der hohen Geschwindigkeit und hohen Temperatur des Katalysatorstromes hat dieser eine extrem abrasive Wirkung. Diese abrasive Wirkung führt dazu, dass die rohrseitigen Führungsleisten E im Bereich der Blendenöffnung C durch die Turbulenzen des Katalysatorstromes stark beschädigt werden. Derartige Führungsleisten E müssen daher in aller Regel nach einer Betriebszeit von drei Jahren ausgetauscht werden.

DE 720 599 offenbart einen Plattenschieber zum Absperren von Gasleitungen, insbesondere Gichtgasleitungen in Hochofenwerken Die Patentschrift befasst sich insbesondere mit dem Problem der Dichtigkeit des Plattenschiebers. Dazu weist der Plattenschieber eine Schieberplatte auf, die aus zwei parallelen Platten gebildet ist, zwischen denen zwei formelastische Dichtungshohlringe angeordnet sind. Diese Dichtungshohlringe sind mit Druckleitungen verbunden und können mit Druck beaufschlagt werden, wodurch die beiden planparallelen Platten der Schieberplatte auseinandergepresst werden. Dadurch wird die Dichtigkeit des Plattenschiebers verbessert. Aus der Patentschrift geht nicht hervor, wie die Seitenführung der Schieberplatte ausgebildet ist.

DE 1 031 596 beschreibt einen gekühlten Heißgasschieber für heiße und schmutzbeladene Betriebsstoffe. Auch bei dieser Patentschrift steht die Dichtigkeit der Armatur im Vordergrund. Zur Erzielung eines über den Umfang der Schieberplatte gleichmäßig verteilten Anpressdruckes sind ringförmige Metallmembranen vorgesehen, wobei die Schieberdicht-platten am Gehäuse elastisch abgestützt sind. Auch dieser Patentschrift ist nicht zu entnehmen, wie die Seitenführung, insbesondere die gehäuseseitige Seitenführung der Schieberplatte konstruiert ist.

Die US-A 3,976,094 und JP-A 08 145200 offenbaren jeweils ein Schieberventil mit Führungsleisten, wobei die Führungsleisten in einem Totraum angeordnet sind, der in Strömungsrichtung des Durchflußmediums einer Blende nachgeordnet ist. Bei dem Stand der Technik gemäß der US-A 3,976,094 sind die Führungsleisten an einem rohrförmigen Fortsatz angeordnet, an dem eine Blendenplatte angeschraubt ist. Die Blendenplatte wird also bei dem bekannten Schieberventil von dem rohrförmigen Fortsatz getragen. Ein Austausch der Führungsleisten ist dementsprechend aufwendig.

Bei dem Schieberventil gemäß der JP-A 08 145200 bildet eine Blendenplatte eine Auflage für ein plattenseitiges Führungselement. Die Blendenplatte ist mit einer Halteleiste verschraubt, die mit einem in Strömungsrichtung vorgeordneten Rohrabschnitt verbunden ist. Die Blendenplatte ist ferner zwischen einer vorderen Fläche und einer hinteren Fläche bzw. im Bereich einer Innenfläche L-förmig ausgebildet. Die Führungsleiste erstreckt sich von der Innenfläche zu einer Seitenfläche, an der die plattenseitigen Führungselemente angeordnet sind, im wesentlichen geradlinig, insbesondere waagerecht.

Des weiteren wird noch auf den Stand der Technik gemäß der JP-A 2000 035140 und US-A 4,458,879 hingewiesen. Die JP-A 2000 035140 zeigt ein Schieberventil mit einer Blende, die Führungsleisten umfaßt, wobei nicht hervorgeht, welche Form die Führungsleisten aufweisen.

Der Erfindung liegt die Aufgabe zugrunde, das gattungsgemäße Schieberventil so zu verbessern, dass es sowohl kompakt als auch verschleißfest ist.

Erfindungsgemäß wird diese Aufgabe durch ein Schieberventil gemäß Anspruch 1 gelöst. Konstruktive Details und weitere Verbesserungen des erfindungsgemäßen Schieberventils sind in den Unteransprüchen angegeben.

Ein wesentlicher Punkt der Erfindung besteht also darin, ein Schieberventil anzugeben, das insbesondere zur Regelung eines Katalysatorstromes oder dergleichen Hochtemperaturmedien angepasst ist, mit einem Rohrabschnitt und einer darin angeordneten Blende, die eine im Betrieb durchströmte Eintritts- und Austrittsöffnung aufweist, sowie mit einer Schieberplatte, die mit der Austrittsöffnung zur Regelung des Medienstromes zusammenwirkt und in eine Offen- bzw. Schließstellung bewegbar ist. Die Schieberplatte ist durch rohrseitig und plattenseitig angeordnete, miteinander in Eingriff befindliche Führungselemente verschieblich gelagert. Die rohrseitig angeordneten Führungselemente sind vor einer Abströmung durch das Medium in Offenstellung II geschützt. Dazu können die Führungselemente außerhalb der Medien angeordnet sein.

Die rohrseitigen Führungselemente können in Strömungsrichtung vor der Austrittsöffnung angeordnet sein.

Die Anordnung der rohrseitigen Führungselemente vor der Austrittsöffnung bewirkt, dass die Führungselemente aus dem Bereich des Medienstromes, zumindest aus dem Bereich entfernt werden, wo der Verschleiß aufgrund der auftretenden Turbulenzen besonders hoch ist. Aufgrund dieser Anordnung ist es ferner nicht mehr erforderlich, die Schieberplatte zu verlängern, um die rohrseitigen Führungselemente im Bereich der Blendenöffnung abzudecken. Die Armatur kann daher sehr kompakt gebaut werden.

Die Blende weist eine Blendenplatte mit einer in Sttömungsrichtung vorderen und hinteren Fläche auf, wobei die Austrittsöffnung in der hinteren Fläche der Blendenplatte ausgebildet ist. Durch den Abstand zwischen der vorderen und hinteren Fläche kann die Ortslage der Austrittsöffnung beeinflusst werden. Durch eine entsprechende Einstellung des Abstandes zwischen der vorderen und hinteren Fläche, d. h. durch eine entsprechenden Dicke der Blendenplatte wird im Bereich vor der Austrittsöffnung ein ausreichender Raum geschaffen, in dem die rohrseitigen Führungselemente angeordnet sind.

Das rohrseitige Führungselement ist in der hinteren Fläche der Blendenplatte angeordnet. Dadurch wird die Herstellung des Schieberventils vereinfacht, da die Lagerung des Führungselementes in der Blendenplatte integriert ist.

Erfindungsgemäß ist das rohrseitige Führungselement in der hinteren Fläche der Blendenplatte ausgebildet. Das bedeutet, dass die Austrittsfläche und die rohrseitigen Führungselemente auf der selben Seite der Blendenplatte, nämlich im Bereich der in Strömungsrichtung hinteren Fläche ausgebildet sind, wobei die rohrseitigen Führungselemente der Austrittsöffnung in Strömungsrichtung vorgeordnet sind. Durch die Anordnung der rohrseitigen Führungselemente in der Blendenplatte werden diese in der Blendenplatte versenkt und sind somit vor dem Medienstrom besonders gut geschützt. Außerdem wird durch diese integrierte Bauweise die Breite der Schieberplatte verkürzt, da seitlich von der Schieberplatte keine Führungselemente vorgesehen sind.

Dabei umfaßt das rohrseitige Führungselement eine Schwalbenschwanzführung oder eine T-Nutführung, die jeweils einfach in die hintere Fläche der Blendenplatte gefräst werden können.

Vorzugsweise sind die plattenseitigen Führungselemente lösbar mit der Schieberplatte verbunden. Die jeweiligen Führungselemente können dann leicht montiert bzw. ausgewechselt werden.

Bei einem anderen nicht erfindungsgemäßen Beispiel sind die Führungselemente, insbesondere die rohrseitigen Führungsleisten in Offenstellung der Schieberplatte abgedeckt. Dazu kann die axiale Langserstreckung der plattenseitigen Führungsleisten derart ausgebildet sein, dass die plattenseitigen Führungsleisten die rohrseitigen Führungsleisten zumindest in der Offenstellung der Schieberplatte im Wesentlichen vollständig überdecken.

Die plattenseitigen Führungsleisten haben somit nicht nur die Funktion, die Schieberplatte seitlich zu führen, sondern fungieren auch als Schutzabdeckung bzw. Abschirmung für die rohrseitigen Führungsleisten, da die plattenseitigen Führungsleisten diese in der Offenstellung der Schieberplatte im Wesentlichen vollständig, also insbesondere im Bereich der Blendenöffnung, überdecken. Durch die Abdeckung der rohrseitigen Führungsleisten im Bereich der Blendenöffnung wird vermieden, dass diese dem abrasiven Medienstrom ausgesetzt sind, wodurch der Verschleiß der rohrseitigen Führungsleisten signifikant verringert wird Die Wartungszeiten, zumindest im Hinblick auf die Führungsleisten, können daher bei dem erfindungsgemäßen Schieberventil verlängert werden

Zwar sind Schieberventile in den verschiedensten Ausführungen bekannt, wie beispielsweise anhand der vorstehend genannten Druckschrift beschrieben. Bei vielen Schieberventilen ist allerdings die Seitenführung in die Seitenwand des Rohrgehäuses integriert und ragt nicht in den Strömungsquerschnitt des Schieberventils hinein, so dass das vorstehend erörterte Verschleißproblem nicht auftritt. Bei dem aus der DE 1 031 596 bekannten Heißgasschieber sind die plattenseitigen Seitenführungsvorsprünge, insbesondere im Bereich der Durchgangsöffnung der Schieberplatte so kurz, dass davon auszugehen ist, dass eine vollständige Überdeckung der in der Patentschrift nicht beschriebenen gehäuseseitigen Führung nicht erfolgt.

Vorzugsweise ist das Schiebeventil zur Anwendung in FCC-Anlagen angepasst. Dies bedeutet, dass das Schiebeventil eine feuerfeste Auskleidung aufweist, die so ausgelegt bzw. konzipiert ist, um Temperaturen von ca. 720°C und Katalysatorströmen mit hohen Geschwindigkeiten von ca. 10m/s standzuhalten. Die als Verschleißschutz vorgesehene axiale Längserstreckung der plattenseitigen Führungsleisten ist derart ausgebildet, dass die plattenseitigen Führungsleisten die rohrseitigen Führungsleisten zumindest in der Offenstellung II der Schieberplatte im wesentlichen vollständig überdecken.

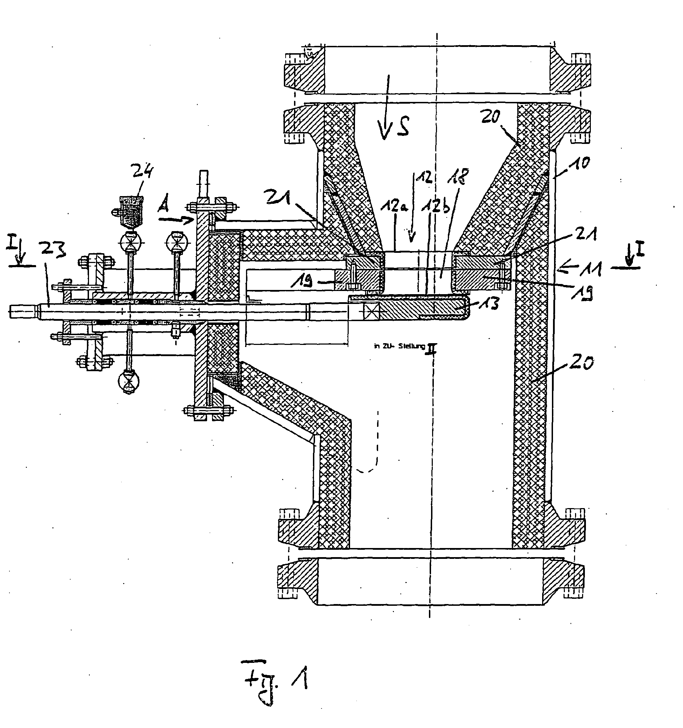

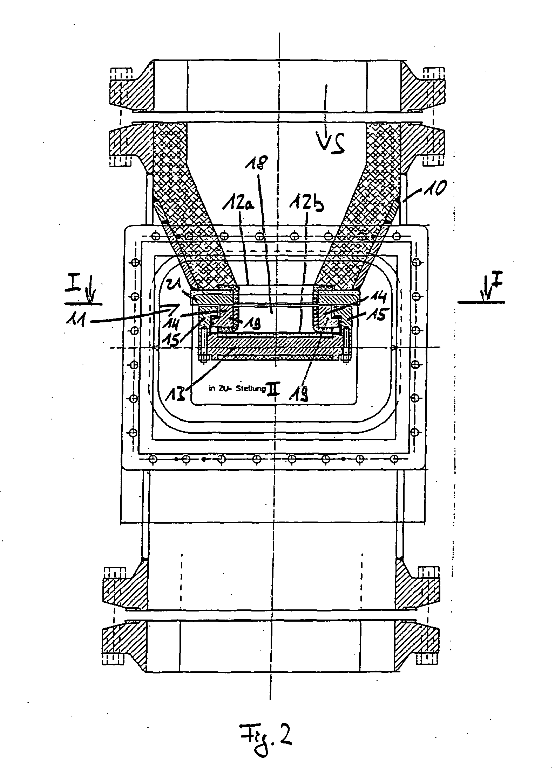

Bei einem nicht erfindungsgemäßen Beispiel weist die Schieberplatte ein Verschlussteil auf, das in der Schließstellung die Blendenöffnung versperrt, sowie ein Öffnungsteil mit einer Durchgangsöffnung, die in der Offenstellung die Blendenöffnung freigibt, wobei die plattenseitigen Führungsleisten sowohl im Bereich des Verschlussteiles als auch im Bereich des Öffnungsteiles zumindest über die Längserstreckung der Dutchgangsöffnung vorgesehen sind. Dabei entspricht die Länge der plattenseitigen Führungsleisten im Bereich des Öffnungsteiles also mindestens der Erstreckung der Blendenöffnung in Bewegungsrichtung der Schieberplatte. Im Unterschied zu dem in den Figuren 1, 2 dargestellten bekannten Schieberventil weist das Schieberventil gemäß diesem Beispiel eine Schieberplatte auf, die nicht nur ein Verschlussteil, sondern auch ein Öffnungsteil aufweist. Dabei sind die plattenseitigen Führungsleisten sowohl im Bereich des Verschlussteiles als auch im Bereich des Öffnungsteiles vorgesehen. Die vollständige Überdeckung der in den Strömungsquerschnitt hineinragenden rohrseitigen Führungsleisten im Bereich der Blendenöffnung wird bei diesem Beispiel dadurch erreicht, dass die Länge der plattenseitigen Führungsleisten im Bereich des Öffnungsteiles mindestens der Erstreckung der Blendenöffnung im Bewegungsrichtung der Schieberplatte entspricht. In der Offenstellung wird der Medienstrom durch die Blendenöffnung und die kongruent angeordnete Durchgangsöffnung der Schieberplatte geleitet, wobei die im Bereich des Öffnungsteiles vorgesehenen plattenseitigen Führungsleisten im Eingriff mit den entsprechenden rohrseitigen Führungsleisten sind. Dabei werden die rohrseitigen Führungsleisten im Bereich der Blendenöffnung überdeckt und somit vor der Berührung mit dem abrasiven Strömungsmedium geschützt.

In einem weiteren Ausführungsbeispiel erstrecken sich die rohrseitigen Führungsleisten in Bewegungsrichtung der Schieberplatte über den Bereich der Blendenöffnung hinaus, mindestens entsprechend der Erstreckung der Blendenöffnung in Bewegungsrichtung der Schieberplatte. Dadurch wird die Stabilität der Seitenführung verbessert. Eine weitere Verbesserung der Stabilität der Führung wird dadurch erreicht, dass sich die rohrseitigen Führungsleisten beidseitig über den Bereich der Blendenöffnung hinaus erstrecken, jeweils mindestens entsprechend der Erstreckung der Blendenöffnung in Bewegungsrichtung der Schieberplatte. Das bedeutet, dass die gesamte Schieberplatte in jeder Position seitengeführt ist unabhängig davon, ob die Schieberplatte in die Offen- bzw. Schließstellung bewegt wird.

Vorzugsweise weist die Blende eine Blendenplatte auf, in der die Blendenöffnung ausgebildet ist, wobei sich die Blendenplatte in Bewegungsrichtung der Schieberplatte beidseitig über die Blendenöffnung hinaus erstreckt, mindestens entsprechend der Erstreckung der Blendenöffnung in Bewegungsrichtung der Schieberplatte. Auf diese Weise wird sichergestellt, dass die Schieberplatte, insbesondere das Verschlussteil sowie das Öffnungsteil der Schieberplatte an der Blendenplatte anliegt, und zwar sowohl in der Offenstellung als auch in der Schließstellung des Schieberventils.

Bei einem anderen nicht erfindungsgemäßen Beispiel ist vorgesehen, dass die Schieberplatte ein Verschlussteil aufweist, wobei die im Bereich des Verschlussteiles vorgesehenen plattenseitigen Führungsleisten über das Verschlussteil in axialer Längsrichtung Vorstehen derart, dass der vorstehende Teil der plattenseitigen Führungsleisten die rohrseitigen Führungsleisten im Bereich der Blendenöffnung im Wesentlichen vollständig überdeckt. Bei dieser Ausführungsform wird auf das Öffnungsteil verzichtet, so dass zwischen den über das Verschlussteil axial hinausragenden Führungsleisten ein Freiraum gebildet ist. In der Offenstellung des Schiebers befindet sich der Freiraum unterhalb der Blendenöffnung und wird von dem Medium durchströmt. Die vorstehenden plattenseitigen Führungsleisten überdecken dabei die rohrseitigen Führungsleisten im Bereich der Blendenöffnung und schützen diese gegen den Medienstrom. Diese Beispiel sform ist besonders kostengünstig und darüber hinaus geeignet, um bestehende Schieberventile nachzurüsten. Dazu muss lediglich das bereits bekannte Verschlussteil mit plattenseitigen Führungsleisten verbunden werden, die über das Verschlussteil in Bewegungsrichtung der Schieberplatte hinausragen.

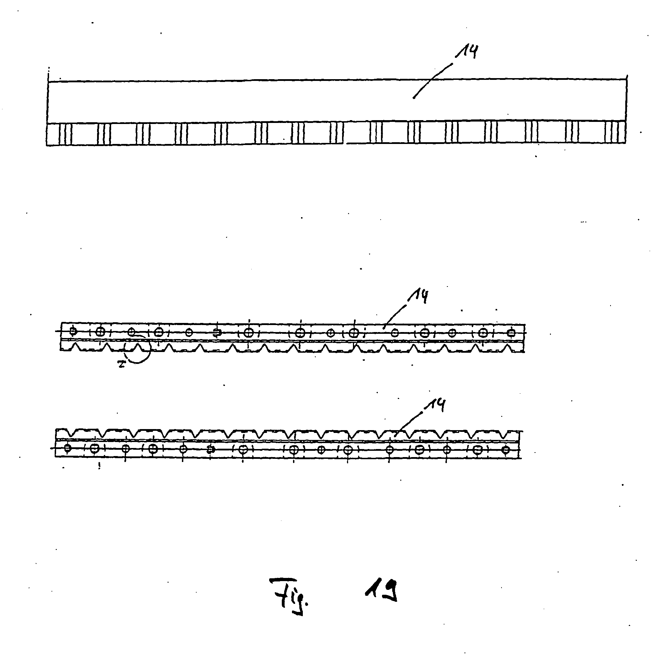

Die Erfindung wird nachfolgend anhand von Beispielen unter Bezug auf die schematischen Zeichnungen näher erläutert, wobei die Beispiele gemäß den Fig. 1-11 und 14-29 nicht Teil der hier beanspruchten Erfindung sind.

In diesen zeigen
- Fig. 1: einen seitlichen Querschnitt durch ein Schieberventil gemäß einem nicht erfin- dungsgemäßen Beispiel, wobei sich das Schieberventil in der Schließstellung II befindet;
- Fig. 2: eine Vorderansicht in Pfeilrichtung A des Schieberventils gemäß Fig. 1 ohne Schieberstange, wobei das Schieberventil im Bereich der Blende teilweise geschnitten ist;
- Fig. 3: die Ansicht gemäß Fig. 2, wobei eine alternative Befestigung der platten- seitigen Führungselemente vorgesehen ist;
- Zig. 4: einen Querschnitt des Schieberventils gemäß Fig. 1 entlang der Linie I-I gemäß Fig. 1 bzw. Fig. 2;
- Fig. 5: das Schieberventil gemäß Fig. 1 in der Offenstellung I;
- Fig. 6: die Ansicht gemäß Fig. 2, wobei sich das Schieberventil in der Offen- stellung I befindet;
- Fig. 7: das Schieberventil gemäß Fig. 3 in der Offenstellung;
- Fig. 8: das Schieberventil gemäß Fig. 4 in der Offenstellung;
- Fig. 9: eine Detailansicht der Führungsanordnung des Schieberventils gemäß Fig. 2;
- Fig. 10: eine ähnliche Führungsanordnung, wie bei dem Schieberventil gemäß Fig. 9;
- Fig. 11: eine alternative Führungsanordnung mit innenliegendem waagrechten Führungsschenkel;
- Fig. 12: eine Führungsanordnung mit Schwalbenschwanzführung;
- Fig. 13: eine Führungsanordnung mit T-Nutführung und
- Fig. 14: eine Gegenüberstellung eines Schieberventils gemäß dem Stand der Technik (linker Teilschnitt) und eines Schieberventils gemäß einem nicht erfindungsge- mäßen Beispiel (rechter Teilschnitt).
- Fig. 15: einen Querschnitt durch ein Schieberventil gemäß einem weiteren Beispiel in Schließstellung;
- Fig. 16: einen Schnitt entlang der Linie A - A gemäß Fig. 3;
- Fig. 17: einen Querschnitt durch das Schieberventil gemäß Fig. 3 in Offenstellung;
- Fig. 18: einen Schnitt entlang der Linie A - A gemäß Fig. 5;
- Fig. 19: eine Seitenansicht und eine Draufsicht auf die rohrseitigen Führungsleisten gemäß Fig. 3;
- Fig. 20: einen Querschnitt und eine Draufsicht auf die Schieberplatte gemäß Fig. 3;
- Fig. 21: einen Querschnitt und eine Draufsicht auf die Blende gemäß Fig. 3;
- Fig. 22: einen Querschnitt und eine Draufsicht auf die Schieberplat- ten/Blendenanordnung gemäß Fig. 3;
- Fig. 23: eine Detailansicht der Schieberplatten/Blendenanordnung gemäß Fig. 4 in Schließ- und Offenstellung sowie mit zwei unterschiedlichen Führungsleis- ten;
- Fig. 24: einen Querschnitt durch eine Schienenanordnung mit dreiteiliger rohrseiti- ger Führungsleiste;
- Fig. 25: einen Querschnitt durch eine dreiteilige rohrseitigen Führungsleiste mit modifizierter Befestigung;
- Fig. 26: einen Querschnitt durch eine einteilige, U-förmige Führungsleiste;
- Fig. 27: einen Querschnitt durch ein Beispiel mit einer Halterung der Blendenplatte;
- Fig. 28: einen Querschnitt durch ein Beispiel mit seitlicher Befestigung der rohrseitigen Führungsleiste; und
- Fig. 29: einen Querschnitt durch ein Beispiel, bei dem in der Verbin- dungsplatte eine Ausnehmung vorgesehen ist.

Fig. 1 zeigt im Querschnitt ein Schieberventil, das in Hochofenanlagen zur Regelung von Hochtemperaturströmen, insbesondere von Katalysatorströmen zum Einsatz kommt.

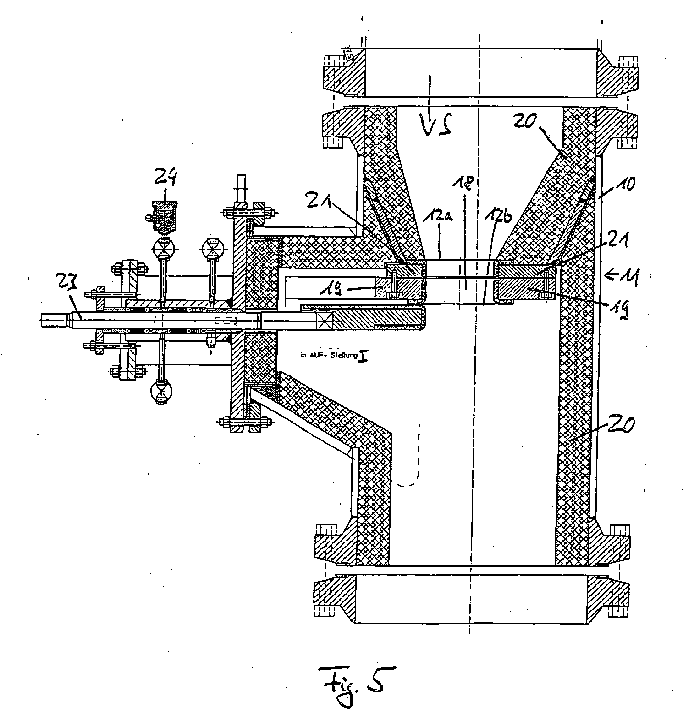

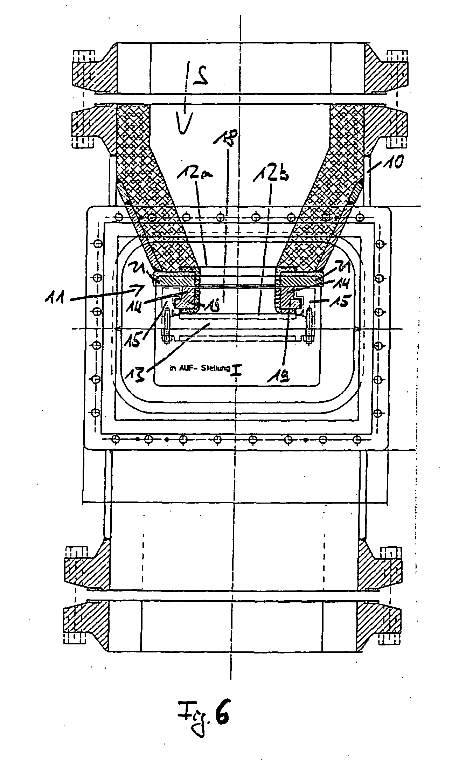

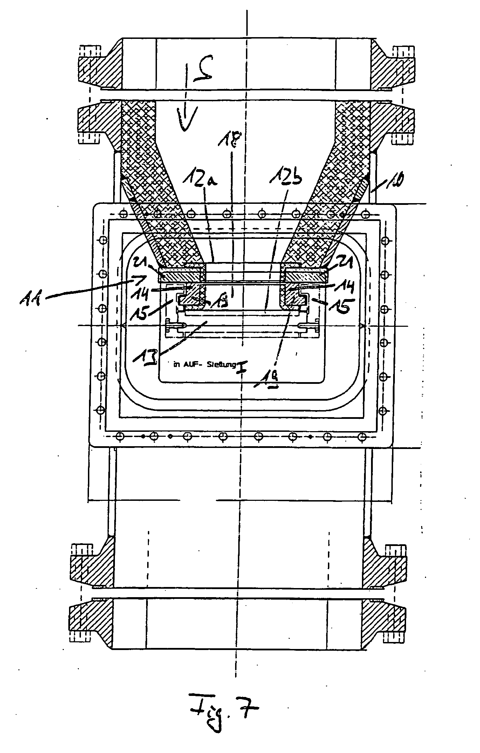

Die Schließstellung II des Schieberventils ist in den Figuren 1 bis 4 und die Offenstellung I in den Figuren 5 bis 8 dargestellt.

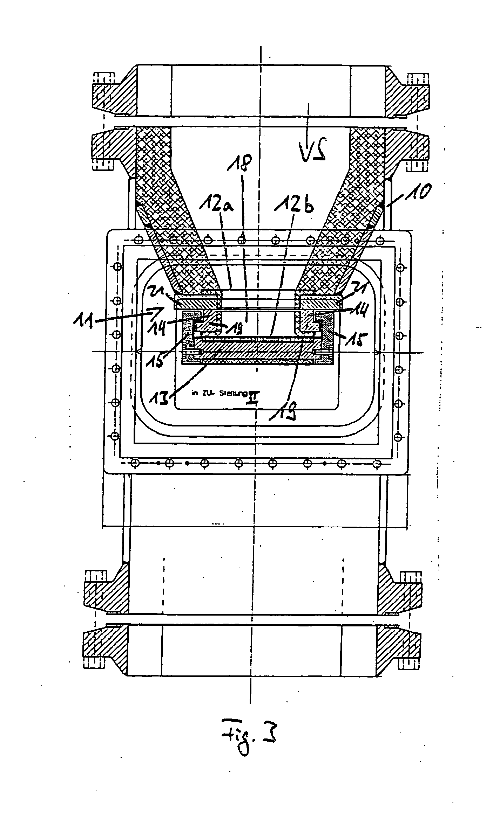

Die Armatur umfasst einen mit einem feuerfesten Material 20 auskleideten Rohrabschnitt 10, der über Flanschverbindungen an entsprechende Anlagenkomponenten angeschlossen wird. Im, in Strömungsrichtung S gesehen, oberen Teil des Rohrabschnittes 10 verjüngt sich das feuerfeste Material 20 und bildet einen Trichter. Am Ende des Trichters ist eine Blende 11 vorgesehen, die sich im Rohrabschnitt 10 quer zur Strömungsrichtung S erstreckt. Die Auslassöffnung des Trichters mündet in eine in der Blende 11 vorgesehene Blendenöffnung 12, die in einer Blendenplatte 19 ausgebildet ist. Die Blendenplatte 19 ist mit einer Verbindungsplatte 21 verschraubt, die mit der Wandung des Rohrabschnittes 10 verbunden ist. Die Blendenöffnung 12 erstreckt sich auch durch die Verbindungsplatte 21 und ist mit einem verschleißfesten Material 22 ausgekleidet. Der Blende 11 ist in Strömungsrichtung S eine Schieberplatte 13 nachgeordnet, die quer zur Strömungsrichtung S in eine Schließstellung I bzw. in eine Offenstellung II bewegbar ist. In Fig. 3 befindet sich die Schieberplatte 13 in der Schließstellung I. Für den Antrieb der Schieberplatte 13 ist diese mit einer Stange 23 verbunden, die aus dem Inneren des Schieberventils herausgeführt und mit einem nicht dargestellten Antrieb gekoppelt ist. Die Lagerung der Stange 23 ist mit einem Injektionsanschluss 24 versehen, über den Stickstoff und weißes Graphitpulver als Trockenschmiermittel eingebracht werden können.

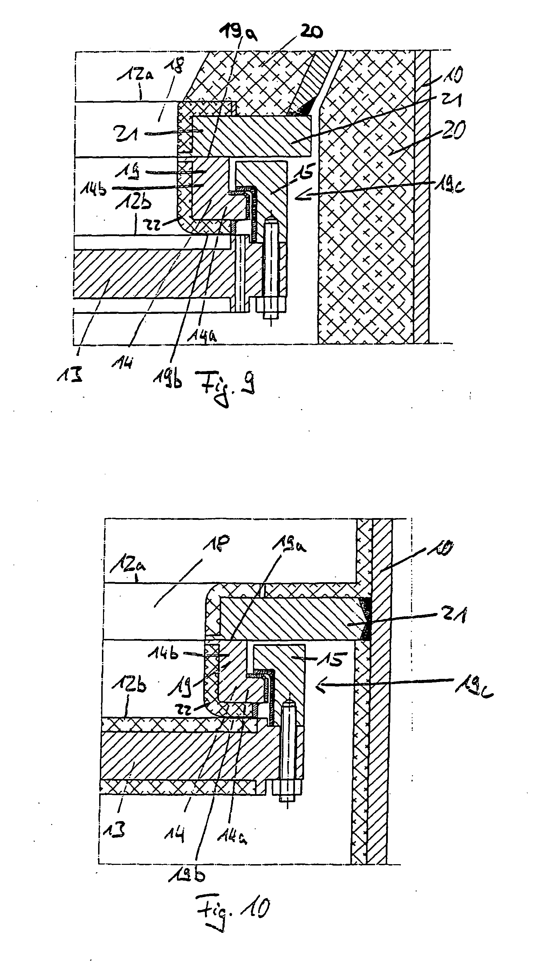

Die Blendenöffnung 12 weist eine Eintrittsöffnung 12a und eine Austrittsöffnung 12b. auf, zwischen denen der Durchgang 18 der Blendenöffnung 12 ausgebildet ist. Die Austrittsöffnung 12b ist allgemein als der Bereich definiert, wo der Medienstrom die Blende 11 verlässt bzw. aus dieser austritt. Konkret wird die Austrittsöffnung 12b bei dem vorliegenden Beispiel gemäß Fig. 1 durch die in Strömungsrichtung gesehene Unterkante der Blendenöffnung 12 bzw. durch das verschleißfeste Material 22 bestimmt, mit dem die Blendenöffnung 12 ausgekleidet ist (Fig. 9, 10). Ohne darauf beschränkt zu sein, ist die Austrittsöffnung 12b in einer im Wesentlichen senkrecht zur Strömungsrichtung S angeordneten Ebene vorgesehen, in der auch die in Strömungsrichtung hintere Flächen 19b der Blendenplatte 19 angeordnet ist. Dabei wird vernachlässigt, dass der horizontale Abschnitt des verschleißfesten Materials 22 und die hintere Fläche 19b geringfügig versetzt sind.

Die Austrittsöffnung 12b muss nicht zwangsläufig senkrecht zur Strömungsrichtung S angeordnet sein. Vielmehr sind auch Anordnungen möglich, bei denen die Austrittsöffnung 12b zur Strömungsrichtung S geneigt ist.

Die Eintrittsöffnung 12a ist allgemein als die Fläche bzw. der Bereich definiert, wo der Medienstrom in die Blende 11 eintritt. Vorliegend sind die Eintrittsöffnung 12a sowie die Austrittsöffnung 12b zwei parallel angeordnete Flächen, die im Betrieb und in Offenstellung I vom Medienstrom durchströmt werden.

Bei der in Fig. 1 dargestellten Schließstellung II wirkt die Schieberplatte 13 mit der Austrittsöffnung 12b derart zusammen, dass die Austrittsöffnung 12b vollständig verschlossen ist.

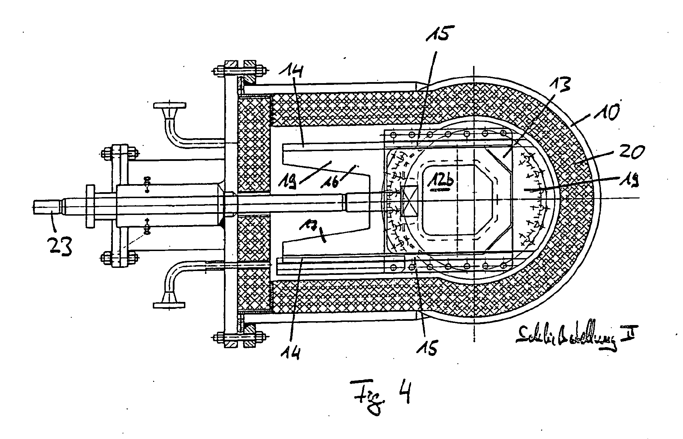

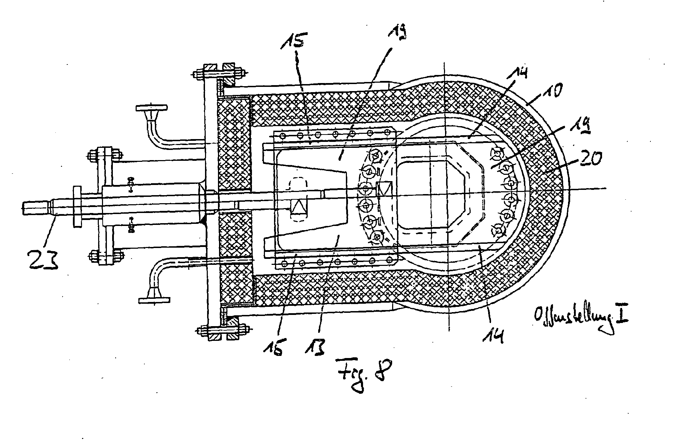

Die Schließstellung II ist besonders gut in Fig. 4 zu erkennen. Dort ist zu sehen, dass die Schieberplatte 13 in den Bereich der Blende 11 verfahren ist, derart, dass die Austrittsöffnung 12b durch die Schieberplatte 13 überdeckt ist. Ferner ist in Fig. 4 zu erkennen, dass die Blendenplatte 19 ausreichend lang ausgebildet ist, um eine Führung der Schieberplatte 13 sowohl in der in Fig. 4 dargestellten Schließstellung II als auch in der in Fig. 8 dargestellten Offenstellung I zu gewährleisten. Für die Führung der Schieberplatte 13 sind Führungselemente 14 vorgesehen, die seitlich von der Austrittöffnung 12b angeordnet und in Längsrichtung der Blendenplatte 19, d.h. in Bewegungsrichtung der Schieberplatte 13 erstreckt sind. Die rohrseitigen Führungselemente 14, d.h. die stationär an bzw. in der Blendenplatte 14 vorgesehenen Führungselemente 14 sind im Eingriff mit plattenseitigen Führungselementen 15, d.h. mit Führungselementen 15, die an der Schieberplatte 13 angeordnet sind.

Die Führungselemente 14, 15 können jeweils als Gleitschienen ausgebildet sein, wobei auch andere Arten der Linearführung möglich sind.

Wie in Fig. 4 dargestellt, weist die Blendenplatte 19 auf dem von der Austrittsöffnung 12 abgewandten Ende eine trapezförmige Ausnehmung auf, die seitlich von zwei Trapezschenkeln 16, 17 begrenzt ist. Die beiden Trapezschenkel 16, 17 verjüngen sich mit zunehmendem Abstand von der Austrittsöffnung 12b. Die rohrseitigen Führungselemente 14 sind teilweise im Bereich der beiden Trapezschenkeln 16, 17 angeordnet und gelagert, wie in Fig. 4 dargestellt.

Durch diese Ausbildung der Blendenplatte 19 wird zum einen das Gewicht der Platte verringert. Gleichzeitig wird gewährleistet, dass die Führungselemente 14 ausreichend stabil gelagert sind.

In den Figuren 2, 3 und der Gegenüberstellung gemäß Fig. 14 ist gut zu erkennen, dass die beiden rohrseitigen Führungselemente 14 in Strömungsrichtung vor der Austrittsöffnung 12b angeordnet sind. Es ist auch möglich, nur ein rohrseitiges Führungselement in Strömungsrichtung vor der Austrittsöffnung anzuordnen. Das andere rohrseitige Führungselement kann auf andere Weise gegen den Medienstrom geschützt werden.

Die vorgeordnete Anordnung der Führungselemente 14 bezogen auf die Austrittsöffnung 12b bedeutet, dass der Medienstrom in der Offenstellung I beim Durchströmen der Blende 11 zuerst die rohrseitigen Führungselemente 14 passiert, bevor er aus der Blende 11 austritt. Die rohrseitigen Führungselemente 14 sind dabei seitlich beabstandet und getrennt vom Blendendurchgang 18 angeordnet und kommen mit dem Medienstrom oder zumindest mit dem turbulenten Bereich des Medienstromes nicht in Berührung. Die vorgeordnete Anordnung der Führungselemente 14 bedeutet, dass diese in einem Totraum des Schieberventils angeordnet sind, wo geringere Verschleißbedingungen herrschen.

Mit anderen Worten ist die Austrittsöffnung 12b in Strömungsrichtung hinter den rohrseitigen Führungselementen 14 vorgesehen.

Die Anordnung der rohrseitigen Führungselemente 14 vor der Austrittsöffnung 12b kann auf verschiedene Weise erfolgen.

Dabei sind generell die Führungselemente 14 im Bereich seitlich von der Austrittsöffnung 12b vorgesehen. Vorzugsweise sind die Führungselemente in oder an der Blendenplatte 19 ausgebildet. Andere Anordnungen bzw. Befestigungen der rohrseitigen Führungselemente 14 sind möglich. Beispielsweise können die Führungselemente 14 anstelle an der Blendenplatte 19 befestigt zu sein, in das feuerfeste Material 20 der Auskleidung der Armatur integriert sein. Dabei muss gewährleistet sein, dass die Führungselemente so angeordnet sind, dass diese der Austrittsöffnung 12b in Strömungsrichtung S vorgeordnet sind.

Bei den in den Figuren 2, 3, sowie in den Figuren 9 - 11 und 14 dargestellten Beispielen sind die rohrseitigen Führungselemente 14 im Bereich der Seitenkanten 19c der Blendenplatte 19 vorgesehen.

Bei den Beispielen gemäß den Figuren 9, 10 ist die Seitenkanten 19c der Blendenplatte 19 im Querschnitt L-förmig ausgebildet und weist daher eine Schulter auf, die im Eingriff mit dem komplementären plattenseitigen Führungselement 15 steht. Konkret weist die als L-förmiges Führungselement 14 ausgebildete Seitenkante 19c einen waagrecht angeordneten Schenkel 14a auf sowie einen senkrecht angeordneten Schenkel 14b. Der waagrechte Schenkel 14a erstreckt sich, bezogen auf die Austrittsöffnung 12b radial nach außen. In den Figuren 9, 10 dargestellten Schließstellung II wird der waagrechte Schenkel 14a von dem zugeordneten plattenseitigen Führungselement 15 übergriffen, das somit auf dem ortsfesten rohrseitigen Führungselement 14 gleitverschieblich gelagert ist.

Die Beispiele gemäß den Figuren 9, 10 unterscheiden sich im Wesentlichen durch die Anordnung der feuerfesten Auskleidung 20.

Die Befestigung der plattenseitigen Führungselemente 15 an der Schieberplatte 13 kann auf verschiedene Weise erfolgen.

Wie in Fig. 2 dargestellt, kann das im Querschnitt umgekehrt L-förmig ausgebildete Führungselement 15 mit der in Strömungsrichtung S vorderen Fläche der Schieberplatte 13 verschraubt sein. Konkret kann im senkrechten Schenkel des im Querschnitt umgekehrt L-förmig ausgebildeten Führungselementes ein Sacklochgewinde ausgebildet sein, das mit einer im Seitenkantenbereich der Schieberplatte 13 angeordneten Durchgangsbohrung fluchtet. Das plattenseitige Führungselement 15 kann auf diese Weise mit der Schieberplatte 13 von unten durch vertikal angeordnete Schrauben verschraubt werden.

Alternativ dazu kann der senkrechte Schenkel des plattenseitigen Führungselementes 15 verlängert sein, wie in Fig. 3 dargestellt, derart, dass der verlängerte Schenkel sich über die Dicke der Schieberplatte 13 erstreckt. Der verlängerte Schenkel des plattenseitigen Führungselementes 15 wird dann seitlich mit der Schieberplatte 13 durch horizontal angeordnete Schrauben verschraubt. Zur Positionierung des Führungselementes 15 ist an dem vom vertikalen Schenkel des Führungselementes 15 abgewandten Ende des senkrechten Schenkels ein Vorsprung vorgesehen, der in eine entsprechende Ausnehmung in der Schieberplatte 13 eingreift.

Außerdem ist es auch möglich, die Führungselemente 15 einteilig mit der Schieberplatte 13 auszubilden.

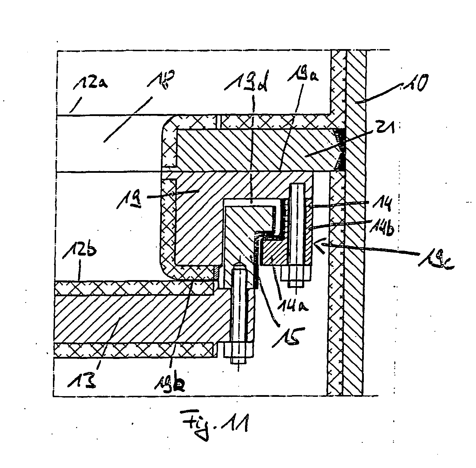

Bei dem Beispiel gemäß Fig. 11 ist das rohrseitige Führungselement 14 ebenfalls im Bereich der Seitenkante 19c der Blendenplatte 19 ausgebildet. Im Unterschied zu dem Beispiel gemäß Fig. 10 ist der waagrechte Schenkel 14a des L-förmigen Führungselementes 14, bezogen auf die Austrittsöffnung 12b, radial nach innen erstreckt. Außerdem ist in der Blendenplatte 19 eine Ausnehmung 19d ausgebildet, die radial innen von einer vertikalen Kante der Blendenplatte 19 begrenzt ist. Radial außen ist die Ausnehmung 19d von dem L-förmigen Führungselement 14 begrenzt, wobei der senkrechte Schenkel 14b parallel zur senkrechten Kante der Blendenplatte 19 angeordnet ist. Zwischen der senkrechten Kante der Blendenplatte 19 und dem waagrechten Schenkel 14a des Führungselementes 14 ist ein Spalt vorgesehen, der in die Ausnehmung 19d mündet. Im Betrieb ist in der Ausnehmung 19d das plattenseitige Führungselement 15 angeordnet, das vorliegend komplementär zum rohrseitigen Führungselement 14 als umgekehrt L-förmiges Führungselement ausgebildet ist. Die beiden Führungselemente 14, 15 sind jeweils mit der Blendenplatte 19 bzw. mit der Schieberplatte 13 verschraubt.

Den vorstehend erläuterten Beispielen ist gemeinsam, dass die Führungselemente 14, 15 im Bereich der Seitenkante der Blendenplatte angeordnet sind. Da die Seitenkante 19c der Austrittsöffnung 12b vorgeordnet sind, wird durch diese Anordnung erreicht, dass die Führungselemente 14, 15, insbesondere die rohrseitigen Führungselemente 14 vor der Austrittsöffnung 12b angeordnet sind.

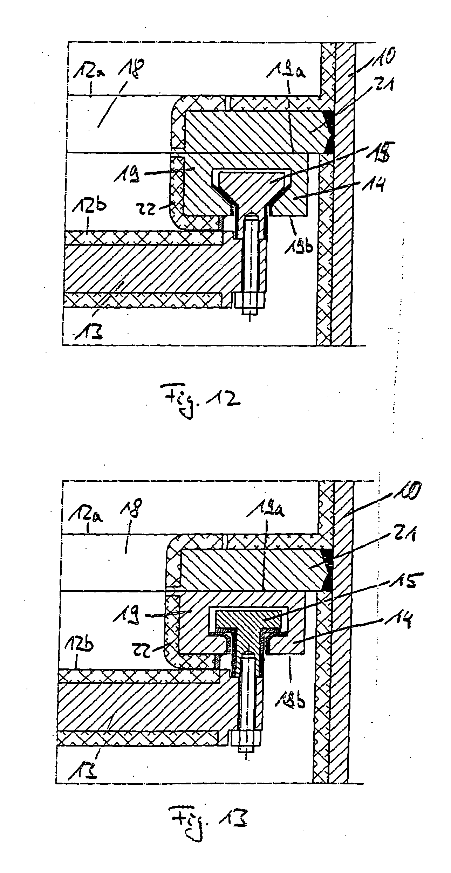

Anstelle der Anordnung der Führungselemente 14, 15 im Bereich der Seitenkante 19c ist es auch möglich, die Führungselemente 14, 15 in der hinteren Fläche 19b der Blendenplatte 19 vorzusehen, wie in den Figuren 12, 13 dargestellt. Gemäß Fig. 12 ist das rohrseitige Führungselement 14 in die Blendenplatte 19 integriert und zwar in Form einer Schwalbenschwanzführung (Fig. 12) bzw. in Form einer T-Nutführung (Fig. 13). Die zugehörigen plattenseitigen Führungselemente sind jeweils entsprechend komplementär ausgebildet. Die Führungselemente sind mit der Schieberplatte 13 verschraubt oder auf andere Art und Weise verbunden.

Die beiden Ausführungsbeispiele gemäß Figuren 12, 13 bewirken einen besonders guten Verschleißschutz, da die kompletten Führungsanordnungen in der Blendenplatte 19 versenkt sind. Außerdem wird durch die Ausbildung der rohrseitigen Führungselemente 14 in der hinteren Fläche 19b der Blendenplatte 19 erreicht, dass die Breite der Anordnung verringert wird, wodurch eine besonders kompakte Bauweise möglich ist.

Die Ausbildung der rohrseitigen Führungselemente 14 in der hinteren Fläche 19b der Blendenplatte 19 bedeutet, dass sich die Führungselemente 14 ausgehend von der hinteren Fläche 19b in die Blendenplatte 19 hinein erstrecken, wodurch erreicht wird, dass die rohrseitigen Führungselemente 14 vor der Austrittsöffnung 12b angeordnet sind.

Dies gilt umso mehr, wenn die Auskleidung des Durchgangs 18 mit dem feuerfesten Material 22 berücksichtigt wird, wodurch die Austrittsöffnung 12b von der hinteren Fläche 19b der Blendenplatte 19 beabstandet wird und zwar in Strömungsrichtung S. Für den Fall, dass die Auskleidung durch das feuerfeste Material 22 in die hintere Fläche 19b der Blendenplatte 19 eingelassen ist (wie im Bereich der Durchgangsöffnung 18), gilt ebenfalls, dass die Führungselemente 14 der Austrittsöffnung 12b vorgeordnet sind.

Die in Strömungsrichtung S vordere Fläche 19a der Blendenplatte 19 liegt an der Verbindungsplatte 21 an, wie in den Figuren 12, 13 dargestellt. Die Blendenplatte 19 ist mit der Verbindungsplatte 21 verschraubt (Fig. 1). Eine andere Ausbildung der Blendenplatte 19 ist ebenfalls möglich. Beispielsweise können die Verbindungsplatte 12 und die Blendenplatte 19 einteilig ausgebildet sein. Durch die Dicke der Blendenplatte 19, also den Abstand der vorderen Fläche 19a von der hinteren Fläche 19b, der die Ortslage der Austrittsöffnung bestimmt, wird der Raum festgelegt, der für die Anordnung der rohrseitigen Führungselemente 14 vor der Austrittsöffnung 12b zur Verfügung steht. Die Dicke der Blendenplatte 19 ist also in Abhängigkeit von der Größe der Führungselemente 14 zu wählen. Beispielsweise kann bei der Integration der Schwalbenschwanzführung in die hintere Fläche 19b eine vergleichsweise dünnere Blendenplatte 19 verwendet werden, als im Fall des im Querschnitt L-förmigen Führungselementes 14 gemäß Fig. 11, das einen innen angeordneten waagrechten Schenkel 14a aufweist.

Im Hinblick auf den für das rohrseitige Führungselement 14 zur Verfügung stehenden Raum kommt es also allgemein darauf an, dass zwischen der Eintrittsöffnung 12a und der Austrittsöffnung 12b der Blende 11 ein ausreichender Abstand vorgesehen ist, so dass die rohrseitigen Führungselemente 14 zwischen der Eintrittöffnung 12a und der Austrittsöffnung 12b angeordnet werden können. Dazu bietet sich vorteilhafterweise an, die Blendenplatte 19 entsprechend auszubilden. Es ist auch möglich, die Verbindungsplatte 21 und die Blendenplatte 19 einteilig auszubilden oder einen anderen Aufbau der Blende 11 zu wählen, vorausgesetzt, der Abstand zwischen der Eintrittsöffnung 12a und der Austrittsöffnung 12b der Blende 11 ist so bemessen, dass die rohrseitigen stationären Führungselemente 14 in Strömungsrichtung S vor der Austrittsöffnung 12b angeordnet werden können.

Die Gegenüberstellung des nicht erfindungsgemäßen Beispiels gemäß Fig. 14, rechter Teilschnitt, mit dem Stand der Technik, zeigt deutlich die mit der Erfindung erzielbaren Vorteile. Durch die Anordnung der rohrseitigen Führungselemente 14 im Bereich der Seitenkante 19c der Blendenplatte 19 wird erreicht, dass die rohrseitigen Führungselemente 14 vor der Austrittsöffnung 12b bzw. der Austrittsfläche 12b der Blendenöffnung 12 in Strömungsrichtung S vorgeordnet sind. Im Unterschied dazu sind im Stand der Technik die rohrseitigen Führungselemente E der Austrittsöffnung 12b nachgeordnet. Die Anordnung der rohrseitigen Führungselemente 14 im Bereich der Seitenkante 19c der Blendenplatte und somit die Anordnung vor der Austrittsöffnung 12b, bewirkt, dass die Führungselemente 14 aus dem Bereich des Medienstromes entfernt werden, so dass diese, bei Offenstellung I des Schieberventils den Medienstrom nicht oder zumindest weniger stark ausgesetzt sind. Dadurch wird der Verschleiß der rohrseitigen Führungselemente 14 signifikant verringert. Bei dem Ausführungsbeispiel gemäß Fig. 14, rechter Teilschnitt, ist die Blendenplatte 14 mit einer größeren Dicke ausgeführt, als im Stand der Technik, um die im Bereich der Seitenkante 19 angeordneten Führungselemente 14 unterzubringen. Die Austrittsöffnung 12b wird dadurch gegenüber dem Stand der Technik in Strömungsrichtung S nach unten versetzt. Der im Stand der Technik ungenutzte Raum seitlich der Blendenplatte 19 wird bei dem nicht erfindungsgemäßen Beispiel gemäß Fig. 14, rechter Teilschnitt, durch die Anordnung der Führungselemente 14 genutzt.

Die Gleitflächen der Führungselemente 14, 15 sind mit einem geeigneten Gleitmaterial beschichtet. Außerdem sind die Führungselemente 14, 15 jeweils mit der Blendenplatte 19 bzw. mit der Schieberplatte 13 lösbar verbunden, so dass die Führungselemente 14, 15 zur Wartung bzw. zur Montage einfach ausgewechselt bzw. befestigt werden können. Die Führungselemente 14, 15 sind als Gleitschienen bzw. Leisten ausgebildet. Andere Führungssysteme sind möglich.

Die Erfindung ist besonders für den Einsatz in Raffinerien, insbesondere FCC-Anlagen geeignet, ohne darauf beschränkt zu sein. Andere Anwendungsmöglichkeiten, bei denen abrasive bzw. korrodierende Medien geregelt werden müssen, sind möglich.

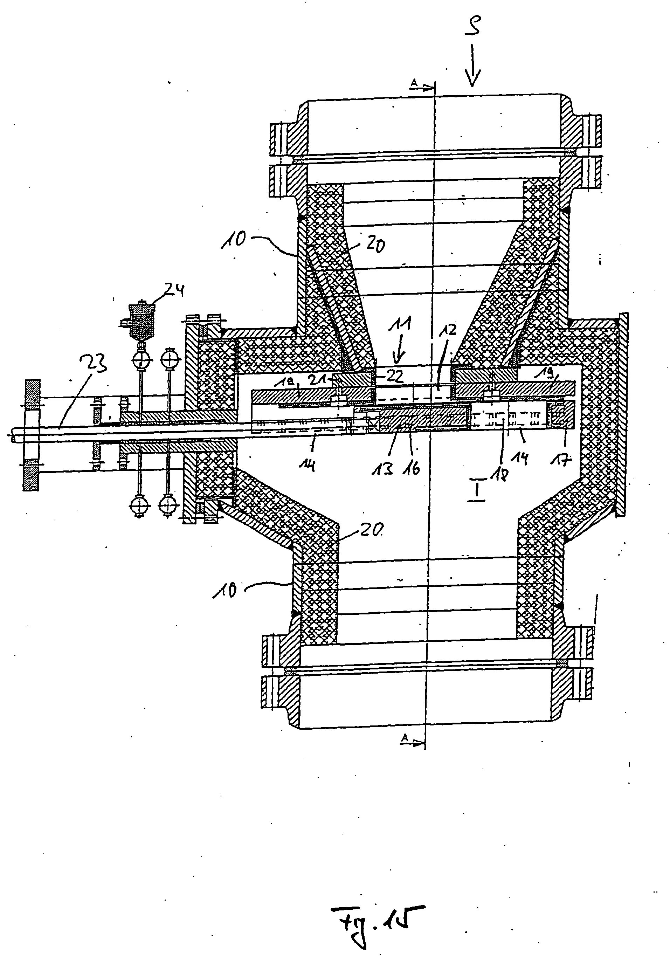

Fig. 15 zeigt im Querschnitt ein Schieberventil, das in Hochofenanlagen zur Regelung von Hochtemperaturströmen, insbesondere von Katalysatorströmen zum Einsatz kommt. Die Armatur umfasst einen mit einem feuerfesten Material 20 auskleideten Rohrabschnitt 10, der über Flanschverbindungen an entsprechende Anlagenkomponenten angeschlossen wird. Im, in Strömungsrichtung S gesehen, oberen Teil des Rohrabschnittes 10 verjüngt sich das feuerfeste Material 20 und bildet einen Trichter. Am Ende des Trichters ist eine Blende 11 vorgesehen, die sich im Rohrabschnitt 10 quer zur Strömungsrichtung S erstreckt. Die Auslassöffnung des Trichters mündet in eine in der Blende 11 vorgesehene Blendenöffnung 12, die in einer Blendenplatte 19 vorgesehen ist. Die Blendenplatte 19 ist mit einer Verbindungsplatte 21 verschraubt, die mit der Wandung des Rohrabschnittes 10 verbunden ist. Die Blendenöffnung 12 erstreckt sich auch durch die Verbindungsplatte 21 und ist mit einem verschleißfesten Material 22 ausgekleidet. Der Blende 11 ist in Strömungsrichtung S eine Schieberplatte 13 nachgeordnet, die quer zur Strömungsrichtung S in eine Schließstellung I bzw. in eine Offenstellung II bewegbar ist.

In Fig. 15 befindet sich die Schieberplatte 13 in der Schließstellung I. Für den Antrieb der Schieberplatte 13 ist diese mit einer Stange 23 verbunden, die aus dem Inneren des Schieberventils herausgeführt und mit einem nicht dargestellten Antrieb gekoppelt ist. Die Lagerung der Stange 23 ist mit einem Injektionsanschluss 24 versehen, über den Stickstoff und weißes Graphitpulver als Trockenschmiermittel eingebracht werden können.

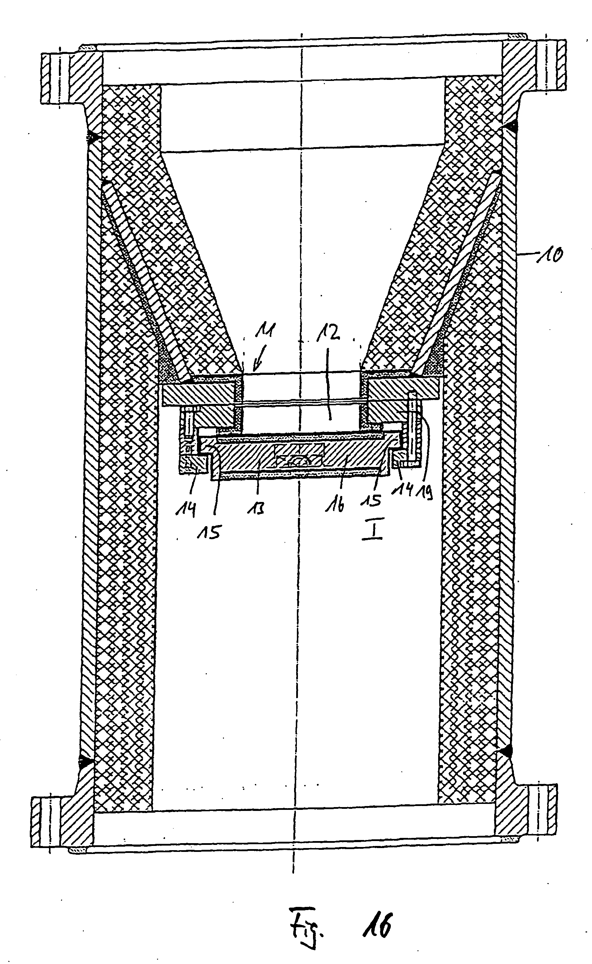

Wie in Fig. 15 und noch besser in Fig. 16 zu erkennen, ist die Schieberplatte 13 durch rohrseitige Führungsleisten 14 gelagert, die seitlich von der Blendenöffnung 12 angeordnet und mit der Blendenplatte 19 verschraubt sind. Dabei ragen die rohrseitigen Führungsleisten 14 in den Strömungsquerschnitt des Rohrabschnittes 10 hinein. An den beiden axialen Längsseiten der Schieberplatte 13 sind passende Führungsleisten 15 angeordnet, die mit den rohrseitigen Führungsleisten 14 ein Schienensystem bilden, durch das die Schieberplatte 13 gleitverschieblich gelagert ist. Anstelle der Führungsleisten 14, 15 können prinzipiell auch andere Führungsmittel, beispielsweise mit Rollen verwendet werden, wobei die Führungsleisten 14, 15 aufgrund ihrer Robustheit für diesen Anwendungsfall besonders geeignet sind.

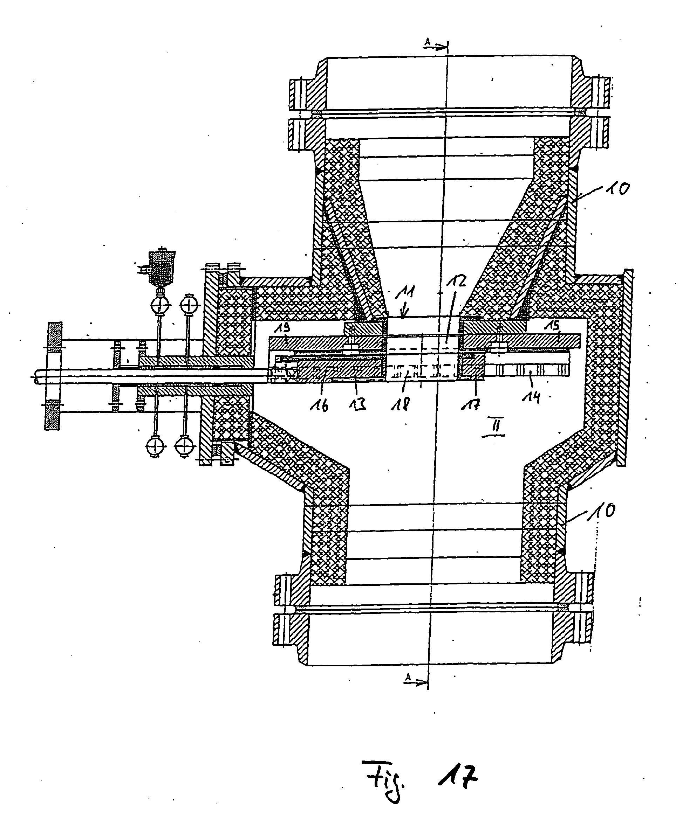

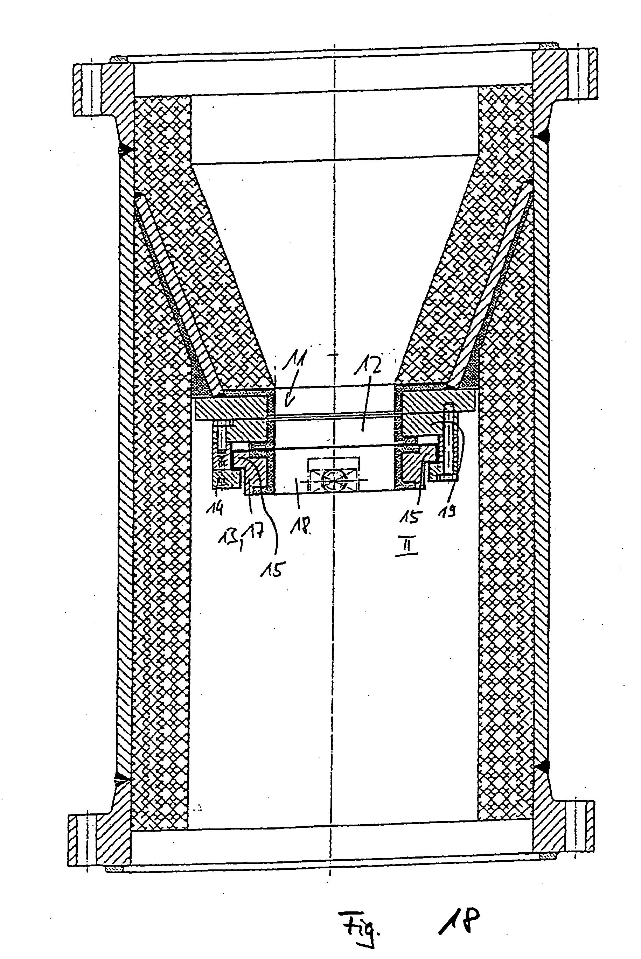

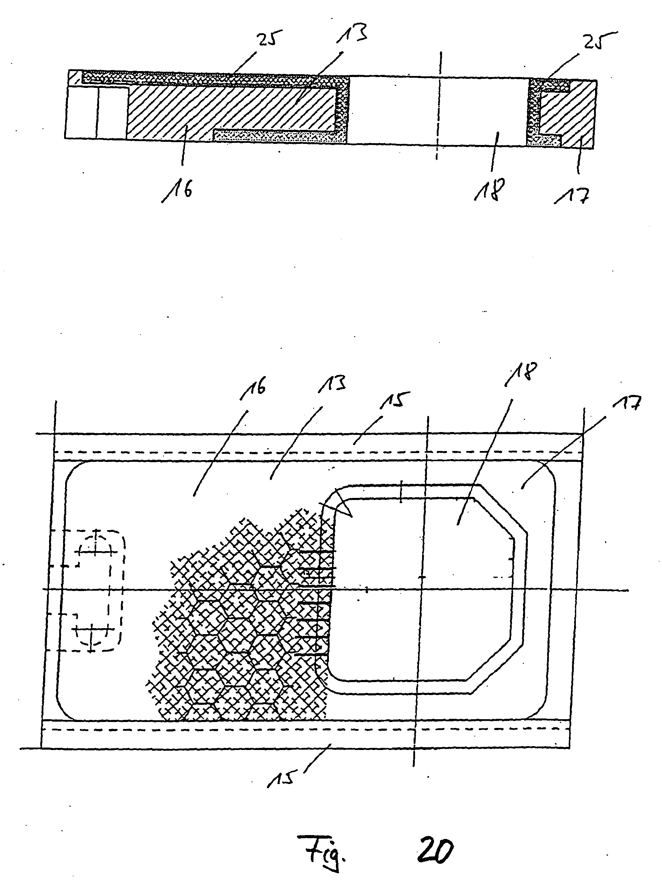

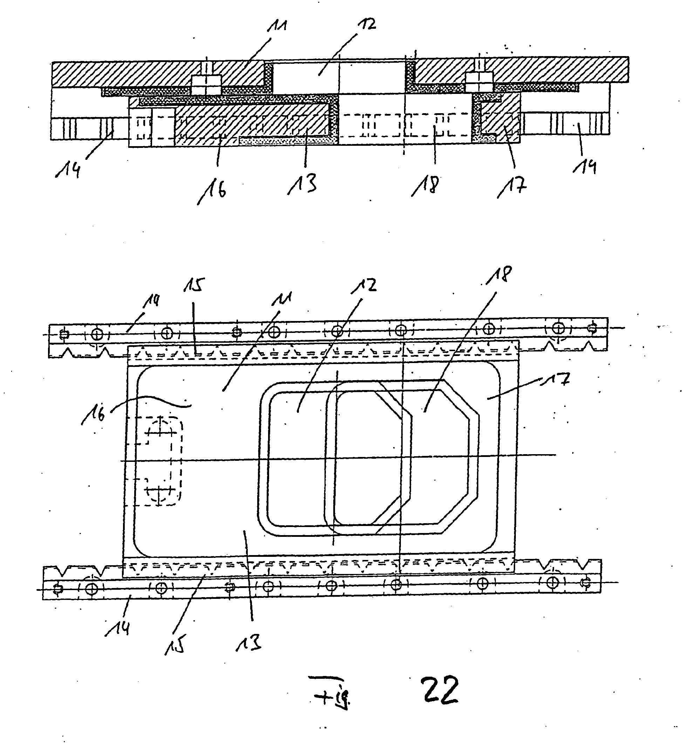

Der Verschleißschutz wird bei diesem Beispiel dadurch erreicht, dass die Schieberplatte im Vergleich zu der bei FCC-Anlagen bekannten Schieberplatte verlängert ist. Die Schieberplatte 13 ist im Vergleich zu der bekannten Schieberplatte konkret so modifiziert, dass nicht nur ein Verschlussteil 16 vorgesehen ist, sondern auch ein auf der anderen Seite der Stange 23 angeordnetes Öffnungsteil 17. Das Öffnungsteil 17 weist eine Durchgangsöffnung 18 auf (Figuren 12, 20), die in Offenstellung II des Schiebers in Übereinstimmung mit der Blendenöffnung 12 gebracht wird (Figuren 17, 18). Da sich die plattenseitigen Führungsleisten 15 sowohl im Bereich des Verschlussteiles 16, als auch im Bereich des Öffnungsteils 17 erstrecken, wie in Fig. 20 dargestellt, überdecken die plattenseitigen Führungsleisten 15 die rohrseitigen Führungsleisten 14 im Bereich der Blendenöffnung, wenn die Schieberplatte 13 in die Offenstellung II verfahren ist. Das bedeutet, dass die axiale Längserstreckung der plattenseitigen Führungsleisten 15 derart ausgebildet ist, dass die plattenseitigen Führungsleisten 15 die rohrseitigen Führungsleisten 14 in der Offenstellung II der Schieberplatte 13 im Wesentlichen vollständig überdecken und somit vor Kontakt mit dem abrasiven Katalysatorstrom schützen. In den Figuren 17, 18 und 22 ist dies besonders gut zu erkennen.

Die rohrseitigen Führungsleisten 14 sind also in den Strömungsquerschnitt des Rohrabschnittes hineinragend angeordnet, ohne dass die Gefahr besteht, dass die Führungsleisten 14 übermäßig schnell verschleißen.

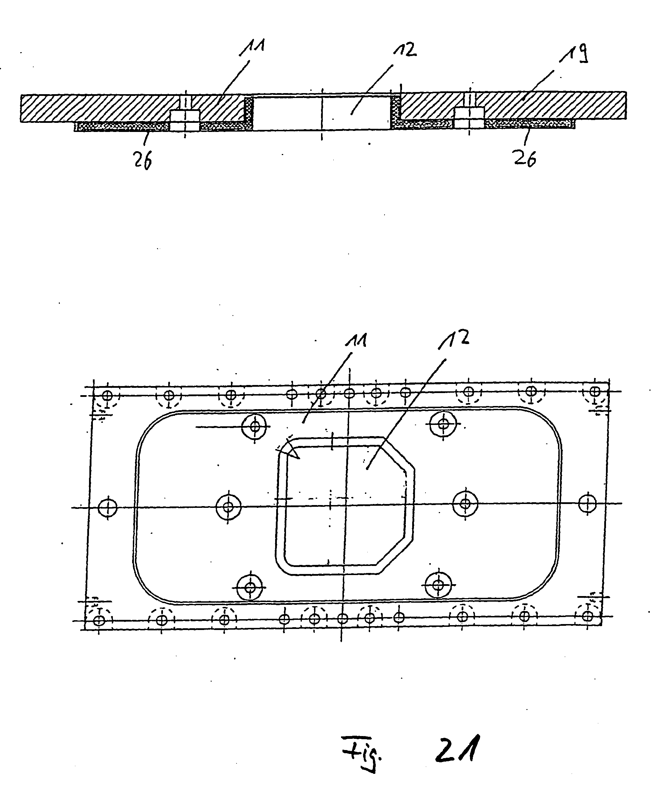

Wie in Fig. 20 dargestellt, ist die Schieberplatte 13 mit einem verschleißbeständigen Material 25 ausgebildet, das auf der in Strömungsrichtung oben befindlichen Seite eine mit der Blendenplatte 19 zusammenwirkende Dichtfläche bildet. Wie in Fig. 21 im Querschnitt gezeigt, ist auch die Blendenplatte 19 mit einem derartigen verschleißfesten Material versehen.

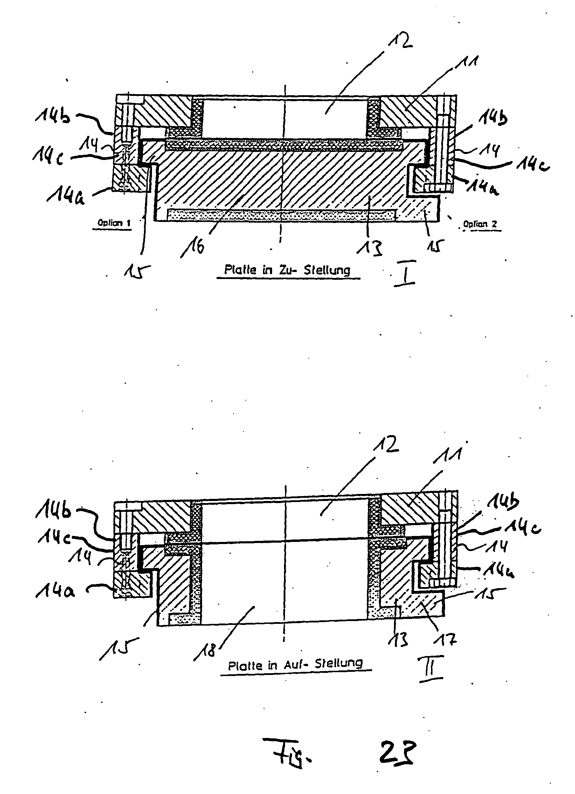

Dabei ist die Länge der rohrseitigen Führungsschiene 14 so ausgebildet, dass sich diese in Bewegungsrichtung der Schieberplatte 13 beidseitig über den Bereich der Blendenöffnung 12 erstreckt, wie in den Figuren 15 und 17 erkennbar. Die Länge des sich jeweils über die Blendenöffnung 12 hinauserstreckenden Abschnittes der rohrseitigen Führungsleisten 14 entspricht mindestens der Erstreckung der Blendenöffnung 12 in Bewegungsrichtung der Schieberplatte 13. Damit wird gewährleistet, dass die Schieberplatte 13 entlang ihrer gesamten axialen Längserstreckung seitlich geführt wird, wenn die Schieberplatte 13 in die Offenstellung II bzw. in die Schließstellung I bewegt wird. Desgleichen erstreckt sich auch die Blendenplatte 19 in Bewegungsrichtung der Schieberplatte 13 beidseitig über die Blendenöffnung 12 hinaus und zwar mindestens entsprechend der Erstreckung der Blendenöffnung 12 in Bewegungsrichtung der Schieberplatte 13 (Fig. 21). Das selbe gilt für das verschleißfeste Material 26, das in Strömungsrichtung unten an der Blendenplatte 19 angebracht ist und zusammen mit dem verschleißfesten Material 25 der Schieberplatte 13 eine Dichtfläche bildet. Konkret ist die Längserstreckung der Blendenplatte 19 in Bewegungsrichtung der Schieberplatte 13 etwas größer, als die Längserstreckung des verschleißfesten Materials 26 auf der Unterseite der Blendenplatte 19, da es genügt, dass das verschleißfeste Material 26 auf der Unterseite der Blendenplatte 19 mit dem entsprechenden verschleißfesten Material 25 der Schieberplatte 13 in Berührung steht, wie in Fig. 23 für beide Stellung I, II dargestellt.

In Fig. 23 ist weiter zu erkennen, dass die Führungsleisten 14, 15 jeweils als ineinander greifende L-förmige Profile ausgebildet sind, wobei der kürzere horizontale Schenkel der plattenseitigen Führungsleiste 15 auf der rohrseitigen Führungsleiste 14 aufliegt und diese vor Berührung mit dem korrosiven Medium schützt. Außerdem deckt der längere vertikale Schenkel der plattenseitigen Führungsleiste eine ins Rohrinnere gewandte Stirnseite der rohseitigen Führungsleiste 14 ab, so dass auch hier ein Schutz vor Berührung mit dem abrasiven Medium besteht.

Eine weitere Verbesserung der Verschleißfestigkeit der Anlage wird dadurch erreicht, dass, wie ebenfalls in Fig. 23 dargestellt, das Profil der plattenseitigen Führungsleiste 15 U-förmig ausgebildet ist. Das Profil der rohrseitigen Führungsleiste 14 ist weiterhin L-förmig, wobei der horizontale Schenkel des L-förmigen Profils der rohrseitigen Führungsleiste 14 zwischen den beiden horizontalen Schenkeln des plattenseitigen U-förmigen Profils angeordnet ist. Damit wird die rohrseitige Führungsleiste 14 auch in Strömungsrichtung von unten gegen den Katalysatorstrom geschützt.

Generell genügt es, wenn die plattenseitige Führungsleiste 15 in Strömungsrichtung S über die Unterkante der rohrseitigen Führungsleiste 14 hinausragt, um eine bereits erhebliche Verbesserung des Verschleißschutzes zu erzielen. Die Unterkante der plattenseitigen Führungsleiste 15 sollte aber mindestens auf gleicher Höhe mit der Unterkante der rohrseitigen Führungsleiste sein, wobei unter Umständen auch Anordnungen toleriert werden, bei denen die Unterkante der plattenseitigen Führungsleiste 15 in Strömungsrichtung S etwas oberhalb der Unterkante der rohrseitigen Führungsleiste 14 angeordnet ist. Ein praktikabler Überlappungsbereich der beiden Führungsleisten 14, 15 beginnt bei der Anordnung der Unterkanten der beiden Führungsleisten 14, 15 im Wesentlichen auf gleicher Höhe. Der Bereich endet, wenn die plattenseitige Führungsleiste 15 die rohrseitige Führungsleiste 14 in Strömungsrichtung etwa um das Doppelte der Länge der rohrseitigen Führungsleiste 14 in Strömungsrichtung S überragt. Höhere Überlappungsfaktoren sind technisch möglich.

Ferner gilt allgemein, dass eine beidseitige Abdeckung der rohrseitigen Führungsleiste 14 auf der strömungszugewandten und der strömungsabgewandten Seite, beispielsweise durch ein U-förmiges Profil der plattenförmigen Führungsleiste 15 zu noch besseren Ergebnissen im Hinblick auf die Verschleißfestigkeit führt.

Fig. 23 ist ferner zu entnehmen, dass die rohrseitigen Führungsleisten 14 einteilig oder zweiteilig ausgebildet sein können. Bei der in Fig. 23 auf der rechten Seite dargestellten Version (Option 2) ist die L-förmige Führungsleiste 14 an der nach oben weisenden Stirnfläche des vertikalen Schenkels 14b mit der Blende 11 verschraubt. Dazu sind im vertikalen und horizontalen Schenkel 14b, 14a Durchgangsbohrungen vorgesehen, die mit entsprechenden Gewindebohrungen in der Blende 11 ausgerichtet sind, so dass die Führungsleiste 14 mit der Blende 11 verschraubt werden kann.

Die Führungsleiste 14 kann zweiteilig mit separaten horizontalen und vertikalen Schenkeln 14a, 14b oder einteilig ausgebildet sein.

Auch die rohrseitige Führungsleiste 14 kann zweiteilig ausgebildet sein, die auf der linken Seite der Fig. 23 dargestellt ist (Option 1). Dazu ist der waagerechte Schenkel 14a der Führungsleiste 14 an ein senkrechtes Zwischenstück 14c angesetzt, derart, dass der waagerechte Schenkel 14a und das senkrechte Zwischenstück 14c den senkrechten Schenkel 14b der L-förmigen Führungsleiste 14 bilden. Der waagerechte Schenkel 14a und das Zwischenstück 14c werden von unten, d.h. über den waagerechten Schenkel 14a verschraubt. Die Verbindung der zweiteiligen Führungsleiste 14 mit der Blende 11 erfolgt separat von oben, d.h. in Strömungsrichtung S, wobei in der Blende 11 eine Durchgangsbohrung vorgesehen ist, die mit einer Gewindebohrung in dem Zwischenteil 14c bzw. dem senkrechten Schenkel 14b der Führungsleiste 14 fluchtet. Dieses Beispiel hat den Vorteil, dass zur Wartung nicht die komplette Führungsleiste 14 ausgewechselt werden muss. Vielmehr genügt es, wenn nur der waagerechte Schenkel 14a entfernt und ersetzt wird.

Anstelle der zweiteiligen Ausführung können die beiden Führungsleisten gemäß Fig. 23 einstufig ausgebildet sein.

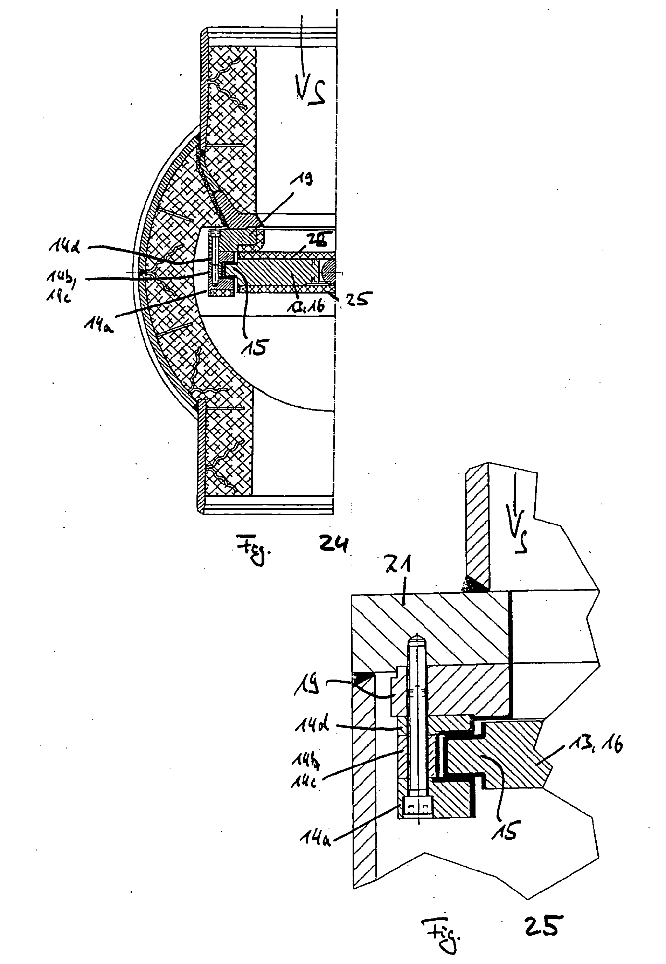

Die in den Fig. 24 bis 29 dargestellten Beispiele betreffen weitere Konstruktionsmöglichkeiten des Schienensystems umfassend die rohrseitigen und plattenseitigen Führungsleisten 14, 15. Dabei können die rohrseitigen Führungsleisten 14 einteilig oder in Längsrichtung mehrteilig, insbesondere zweiteilig oder dreiteilig ausgebildet sein.

Die Beispiele gemäß den Fig. 24, 25 betreffen dreiteilig aufgebaute Führungsleisten 14. Dabei sind die rohrseitigen Führungsleisten 14 ähnlich wie die plattenseitigen Führungsleisten 15 gemäß Fig. 23 (Option 2) im Querschnitt U-förmig ausgebildet. Die U-förmigen Führungsleisten 14 sind aus einem waagerechten Schenkel 14a, einem senkrechten Zwischenstück 14c und einem weiteren waagerechten Schenkel 14d aufgebaut, wobei die beiden waagerechten Schenkel 14a, 14d durch das senkrechte Zwischenstück 14c beabstandet sind. Wie in den Fig. 24, 25 dargestellt, ist die dreiteilige Führungsleiste 14 im Querschnitt U-förmig ausgebildet. Die plattenseitige Führungsleiste 15 weist im wesentlichen eine zur rohrseitigen Führungsleiste 14 komplementäre Form auf, wobei die plattenseitige Führungsleiste 15 beidseitig, d.h. in Strömungsrichtung oben und unten von den beiden waagerechten Schenkeln 14a, 14d umgriffen wird. Dadurch wird eine besonders sichere Führung des Schiebers erreicht. Das in Fig. 24 dargestellte Verschlussteil 16 der Schieberplatte 13 ist beidseitig, d.h. in Strömungsrichtung S oben und unten durch ein verschleißfestes Material 25 geschützt. In Strömungsrichtung S nach unten wird dadurch insgesamt eine Stärke der Schiebeplatte 13 erreicht, durch die die plattenseitige Führungsleiste 15 die rohrseitige Führungsleiste 14 nahezu vollständig überdeckt. Bei dem Beispiel gemäß Fig. 25 ist der Schutz durch das verschleißfeste Material 25 nicht dargestellt.

Im übrigen ist die vergleichsweise schmale Ausbildung der Schiebeplatte 13 im Bereich des Verschlussteiles 16 gemäß Fig. 25 unschädlich, da in der in Fig. 25 dargestellten Schließstellung keine Durchströmung des Schieberventiles stattfindet. Vielmehr kommt es darauf an, dass im Bereich des Öffnungsteiles 17 die Überdeckung der rohrseitigen Führungsleisten 14 durch die plattenseitigen Führungsleisten 15 erfolgt.

Ohne darauf eingeschränkt zu sein, sind die Führungsleisten 14, 15 über die gesamte Länge wie in den Querschnitten gemäß den Figuren 24 bis 29, bis auf Fig. 25, ausgebildet.

Die beiden Beispiele gemäß Fig. 24, 25 unterscheiden sich u.a. in der Befestigung der rohrseitigen Führungsleisten 14. Bei dem Beispiel gemäß Fig. 24 wird die rohrseitige Führungsleiste 14 in Strömungsrichtung S von oben, d.h. ausgehend von der Blendenplatte 19 befestigt. Dazu sind in der Blendenplatte 19, dem in Strömungsrichtung S oberen waagerechten Schenkel 14d und dem senkrechten Zwischenstück 14c fluchtende Durchgangsbohrungen vorgesehen. In dem in Strömungsrichtung S unteren waagerechten Schenkel 14a ist eine ebenfalls fluchtend angeordnete Gewindebohrung ausgebildet, so dass die drei Einzelteile 14a, 14c, 14d der rohrseitigen Führungsleiste 14 mit der Blendenplatte 19 verschraubt werden können, wie in Fig. 24 dargestellt.

Bei dem Beispiel gemäß Fig. 25 ist die rohrseitige Führungsleiste 14, von unten, d.h. entgegen der Strömungsrichtung S mit der Blendenplatte 19 bzw. der Verbindungsplatte 21 verschraubt. Dazu sind Durchgangsbohrungen in den beiden waagerechten Schenkeln 14a, 14d sowie im Zwischenstück 14b und in der Blendenplatte 19 ausgebildet, die mit einer Gewindebohrung in der Verbindungsplatte 21 fluchten. Dadurch können die Einzelteile der rohrseitigen Führungsleiste 14c mit der Blendenplatte 19 bzw. der Verbindungsplatte 21 von unten her verschraubt werden. Dieses Beispiel hat den Vorteil, dass die einzelnen Bestandteile der rohrseitigen Führungsleiste 14 bei Bedarf einfach ausgetauscht werden können.

Anstelle der mehrteiligen, insbesondere der dreiteiligen rohrseitigen Führungsleiste 14 kann auch eine einteilige rohrseitigen Führungsleiste 14 eingesetzt werden, wie in Fig. 14 dargestellt. Die einteilige und im Querschnitt U-förmig ausgebildete Führungsleiste 14 ist dabei von oben, d.h. über die Blendenplatte 19 befestigt.

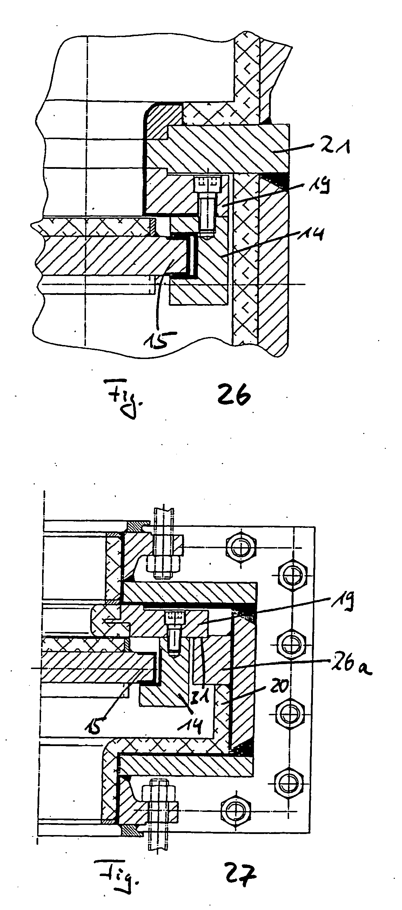

Wie in Fig. 27 dargestellt, kann die Blendenplatte 19 durch eine seitlich von der rohrseitigen Führungsleiste 14 angeordnete Halterung 26a gelagert sein. Die Halterung 26a sitzt dabei auf der feuerfesten Auskleidung 20 auf und ist mit dem Gehäuse verschweißt. Wie in Fig. 27 ferner zu erkennen, sitzt die Blendenplatte 19 in einer im Bereich der Vorderkante der Halterung 26a eingebrachten Ausnehmung 31. Die Vorderkante der Halterung 26a entspricht der der Führungsleiste 14 zugewandten freien Kante der Halterung 26a.

Bei dem Beispiel gemäß Fig. 27 ist die rohrseitige Führungsleiste 14 im Querschnitt L-förmig ausgebildet. Es ist auch möglich, eine U-förmig ausgebildete Führungsleiste 14 zu verwenden.

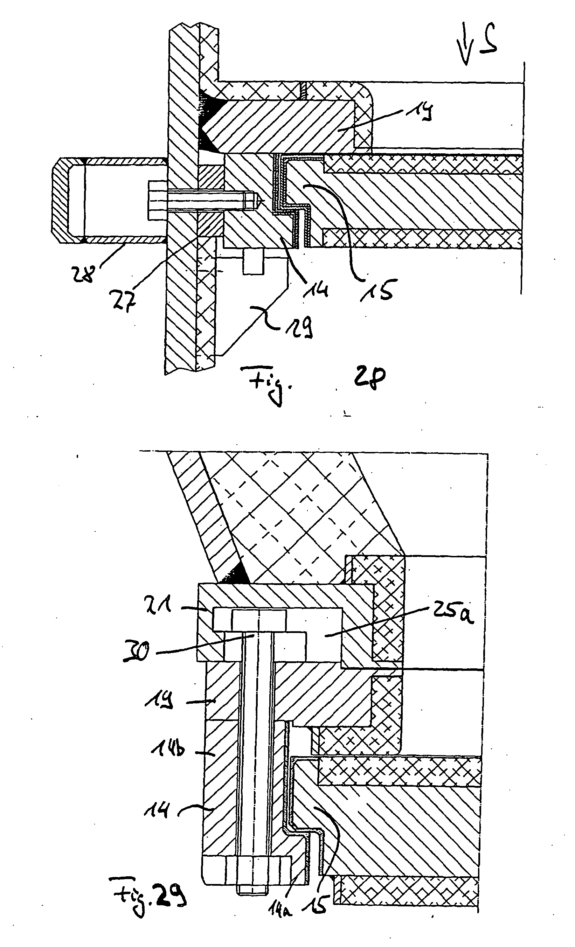

Bei dem Beispiel gemäß Fig. 28 ist die rohrseitige Führungsleiste 14 seitlich am Gehäuse des Schieberventiles befestigt und zwar angeschraubt. Dazu ist zwischen der Führungsleiste 14 und der Gehäusewandung ein Abstandshalter 27 angeordnet, der die Führungsleiste 14 in die richtige Position bringt. Außerhalb des Gehäuses wird die Schraube, mit der die Führungsleiste 14 seitlich befestigt ist, durch eine Abdeckung 28 überdeckt. In Strömungsrichtung S unterhalb der Führungsleiste 14 ist noch eine Abstützung 29 vorgesehen, die mit der Gehäusewandung verbunden ist. Bei diesem Ausführungsbeispiel entfällt die Verbindung zwischen der rohrseitigen Führungsleiste 14 und der Blendenplatte 19. Das Beispiel gemäß Fig. 28 ist sowohl für die in Fig. 28 dargestellte im Querschnitt L-förmige Führungsleiste 14 als auch für im Querschnitt U-förmig ausgebildete Führungsleisten 14 geeignet.

Das in Fig. 29 dargestellte Beispiel ist für eine senkrechte Befestigung der rohrseitigen Führungsleiste 14 vorgesehen, wobei in der Verbindungsplatte 21 eine Ausnehmung 25a ausgebildet ist, die zur Aufnahme eines Befestigungsmittels 30, insbesondere einer Schraube zur Verbindung der rohrseitigen Führungsleiste 14 mit der Verbindungsplatte 21 angepasst ist. Dabei sind in der rohrseitigen Führungsleiste 14 sowie in der Blendenplatte 19 Durchgangsbohrungen ausgebildet, wobei von unten her eine Mutter auf die Schraube aufgeschraubt ist, die im waagerechten Schenkel 14a versenkt ist.

Bei einem weiteren nicht dargestellten Beispiel sind plattenseitige Führungsleisten an die von der Stange 23 abgewandte Seite des Verschlussteiles angesetzt derart, dass die plattenseitigen Führungsleisten über das Verschlussteil in axialer Längsrichtung vorstehen. Die Länge des vorstehenden Bereiches der Führungsleisten entspricht im Wesentlichen der Länge der rohrseitigen Führungsleisten im Bereich der Blendenöffnung, wodurch erreicht wird, dass der überstehende Bereich der Führungsleisten die rohrseitigen Führungsleisten im Bereich der Blendenöffnung überdecken, wenn die Schieberplatte in die Offenstellung bewegt ist. Bei diesem Ausführungsbeispiel wird also auf den Öffnungsteil mit der Durchgangsöffnung verzichtet, wodurch eine besonders einfach zu realisierende Lösung geschaffen wird.

### Bezugszeichenliste

- 10: Rohrabschnitt
- 11: Blende
- 12: Blendenöffnung
- 12a: Eintrittsöffnung
- 12b: Austrittsöffnung
- 13: Schieberplatte
- 14: rohrseitiges Führungselement
- 14a: waagrechter Schenkel
- 14b: senkrechter Schenkel
- 15: plattenseitiges Führungselement
- 16: Trapezschenkel
- 17: Trapezschenkel
- 18: Durchgangsöffnung
- 19: Blendenplatte
- 19a: vordere Fläche
- 19b: hintere Fläche
- 19c: Seitenkante
- 19d: Ausnehmung
- 20: feuerfestes Material
- 21: Verbindungsplatte
- 22, 25, 26: verschleißfestes Material
- 23: Stange
- 25a: Ausnehmung
- 26a: Halterung
- 27: Abstandshalter
- 28: Abdeckung
- 29: Abstützung
- 30: Befestigungsmittel
- 31: Ausnehmung

## Patentansprüche

1. Schieberventil, insbesondere zur Regelung eines Katalysatorstromes oder dergleichen Hochtemperaturmedien, mit einem Rohrabschnitt (10) und einer darin angeordneten Blende (11), die eine im Betrieb durchströmte Blendenöffnung (12) mit einer Eintritts- und Austrittsöffnung (12a, 12b) aufweist, sowie mit einer Schieberplatte (13), die mit der Austrittsöffnung (12b) zur Regelung des Medienstromes zusammenwirkt und in eine Offen- bzw. Schließstellung I, II bewegbar ist, wobei die Schieberplatte (13) durch rohrseitig und plattenseitig angeordnete, miteinander in Eingriff befindliche Führungselemente (14, 15) verschieblich gelagert ist, wobei die rohrseitigen Führungselemente (14) in Strömungsrichtung vor der Austrittsöffnung (12b) angeordnet und vor einer Anströmung durch das Medium in Offenstellung I geschützt sind und die Blende (11) eine Blendenplatte (19) mit einer In Strömungsrichtung vorderen und hinteren Fläche (19a, 19b) aufweist, wobei die Austrittsöffnung (12b) in der hinteren Fläche (19b) der Blendenplatte (19) ausgebildet ist,
**dadurch gekennzeichnet, dass**
wenigstens ein rohrseitiges Führungselement (14), das eine Schwalbenschwanzführung oder eine T-Nutführung umfasst, in der hinteren Fläche (19b) der Blendenplatte (19) ausgebildet ist.

2. Schieberventil nach Anspruch 1
**dadurch gekennzeichnet, dass**
die rohrseitigen Führungselemente (14) außerhalb der Medienströmung angeordnet sind.

3. Schieberventil nach Anspruch 1 oder 2,
**dadurch gekennzeichnet, dass**
die plattenseitigen Führungselemente (15) lösbar mit der Schieberplatte (13) verbunden sind.

## Claims

1. Slide valve, especially for controlling a flow of catalyst or like high-temperature media, having a pipe portion (10) and, arranged therein, a restrictor (11) which has a restrictor aperture (12) through which flow takes place during operation, which restrictor aperture has an inlet opening and an outlet opening (12a, 12b), and having a slide plate (13) which co-operates with the outlet opening (12b) to control the flow of media and which is movable into an open position and a closed position I, II, the slide plate (13) being mounted so as to be displaceable by means of guide elements (14, 15) arranged on the pipe and on the plate, which guide elements are in engagement with one another, the pipe-associated guide elements (14) being arranged before the outlet opening (12b) in the direction of flow and being protected from being impinged on by the flow of medium in the open position I, and the restrictor (11) having a restrictor plate (19) having a forward face and a rear face (19a, 19b) in the direction of flow, the outlet opening (12b) being provided in the rear face (19b) of the restrictor plate (19),
**characterized in that**
at least one pipe-associated guide element (14), which comprises a dovetail guide means or a T-groove guide means, is provided in the rear face (19b) of the restrictor plate (19).

2. Slide valve according to claim 1,
**characterized in that**
the pipe-associated guide elements (14) are arranged outside the flow of media.

3. Slide valve according to claim 1 or 2,
**characterized in that**
the plate-associated guide elements (15) are releasably joined to the slide plate (13).

## Revendications

1. Soupape à coulisse, en particulier pour la régulation d'un flux catalytique ou de fluides à haute température similaires, avec une section tubulaire (10) et un obturateur (11) disposé dedans, qui présente une ouverture d'obturateur (12) traversée en fonctionnement, avec une ouverture d'entrée et une ouverture de sortie (12a, 12b), ainsi qu'avec une plaque à coulisse (13) coopérant avec l'ouverture de sortie (12b) pour la régulation du flux fluidique et pouvant être déplacée dans une position ouverte ou fermée I, II, la plaque coulissante (13) étant logée de manière mobile par des éléments de guidage (14, 15) disposés côté tube et côté plaque, se trouvant en engagement l'un avec l'autre, les éléments de guidage (14) côté tube étant disposés dans le sens d'écoulement avant l'ouverture de sortie (12b) et étant protégés d'un afflux de fluide en position ouverte I et l'obturateur (11) présentant une plaque d'obturateur (19) avec une surface avant et une surface arrière (19a, 19b) dans le sens d'écoulement, l'ouverture de sortie (12b) étant réalisée dans la surface arrière (19b) de la plaque d'obturateur (19),
**caractérisée en ce qu'**au moins un élément de guidage côté tube (14) qui comporte un guidage en queue d'aronde ou un guidage de rainure en T, est réalisé dans la surface arrière (19b) de la plaque d'obturateur (19).

2. Soupape à coulisse selon la revendication 1,
**caractérisée en ce que** les éléments de guidage (14) côté tube sont disposés en dehors de l'écoulement de fluide.

3. Soupape à coulisse selon la revendication 1 ou 2,
**caractérisée en ce que** les éléments de guidage (15) côté plaque sont reliés de manière amovible à la plaque coulissante (13).
